Europäisches Patentamt

European Patent Office

Office européen des brevets

(11) Publication number: **0 462 279 A1**

# EUROPEAN PATENT APPLICATION
## published in accordance with Art. 158(3) EPC

(21) Application number: **91900049.7**

(22) Date of filing: **07.12.90**

(86) International application number:
**PCT/JP90/01603**

(87) International publication number:
**WO 91/08860 (27.06.91 91/14)**

(51) Int. Cl.5: **B23Q 17/00, B23Q 3/155**

(30) Priority: **11.12.89 JP 320914/89**

(43) Date of publication of application:
**27.12.91 Bulletin 91/52**

(84) Designated Contracting States:
**DE FR GB**

(71) Applicant: **FANUC LTD.**
**3580, Shibokusa Aza-Komanba Oshinomura**
**Minamitsuru-gun, Yamanashi 401-05(JP)**

(72) Inventor: **IKEDA, Yoshiaki Fanuc Mansion**
**Harimomi 6-310**
**3537-1, Shibokusa Oshinomura**
**Minamitsuru-gun Yamanashi 401-05(JP)**
Inventor: **JINNAI, Minoru Fanuc Mansion**
**Harimomi 7-104**
**3539-1, Shibokusa Oshinomura**
**Minamitsuru-gun Yamanashi 401-05(JP)**

(74) Representative: **Brunner, Michael John et al**
**GILL JENNINGS & EVERY 53-64 Chancery**
**Lane**
**London WC2A 1HN(GB)**

(54) **METHOD OF CORRECTION OF TOOL.**

(57) A method of compensating for the length, diameter, or wear of a tool on a numerical control device. Information on tool correction is written in a RAM (3) provided on a tool holder (1). In response to a tool correction instruction in a machining program (14a), information on tool correction is read out and tool correction means (32) performs tool correction. Because of direct read-out of tool correction information from the RAM (3), the serial number of a tool always coincides with associated tool correction information and errors can be prevented.

Fig. 1

TECHNICAL FIELD

The present invention relates to a tool correction system for a numerically controlled machine tool, and more specifically, to a tool correction system by which tool correction data are directly stored in a memory provided with a tool holder or the like.

BACKGROUND ART

In a numerically controlled machine tool, tool correction data such as a tool length, tool diameter, wear amount of a tool and the like are stored in the non-volatile memory of a numerical control apparatus, and when a tool correction is commanded, the numerical control apparatus reads the tool correction data and the like of the tool having a tool number corresponding to the command.

Nevertheless, a machining center and the like sometimes include hundreds of tools, and thus the danger of an incorrect input of the tool correction data is increased: e.g., a tool length may be input with an incorrect number of figures or the tool correction amount of another tool may input.

When a tool number does not correspond to the actual tool correction data, a tool correction cannot be properly executed, and thus a workpiece may be improperly machined or the tool may be broken. Therefore, although preferably a tool is accurately matched with the tool correction data corresponding thereto, it is difficult to completely remove the chance of a mismatch between the tool and the tool correction data as long as the tool is made to correspond to tool correction data within a range which can be recognized by an operator or the like.

DISCLOSURE OF THE INVENTION

Taking the above into consideration, an object of the present invention is to provide a tool correction system by which tool correction data is directly read by storing the data in a memory provided at a tool holder or the like.

To solve the above problem, according to the present invention, there is provided a tool correction system for correcting a tool length, tool diameter, wear amount of a tool and the like in a numerical control apparatus, which comprises the steps of writing tool correction data to a memory, to and from which data can be written and read, provided at a tool holder or tool, reading the tool correction data in response to a tool correction command in a machining program, and executing a tool correction.

The tool correction data is directly written to the memory provided at the tool holder or tool, and when the tool correction command is issued, the tool correction is executed by directly reading the tool correction data from the memory, and accordingly, the tool number always corresponds to the tool correction data.

BRIEF DESCRIPTION OF THE DRAWINGS

Figure 1 is a conceptual diagram of a tool correction system according to the present invention; and
Figure 2 is a block diagram of the hardware of a numerical control apparatus (CNC) embodying the present invention.

BEST MODE OF CARRYING OUT THE INVENTION

An embodiment of the present invention will be described below with reference to the drawings.

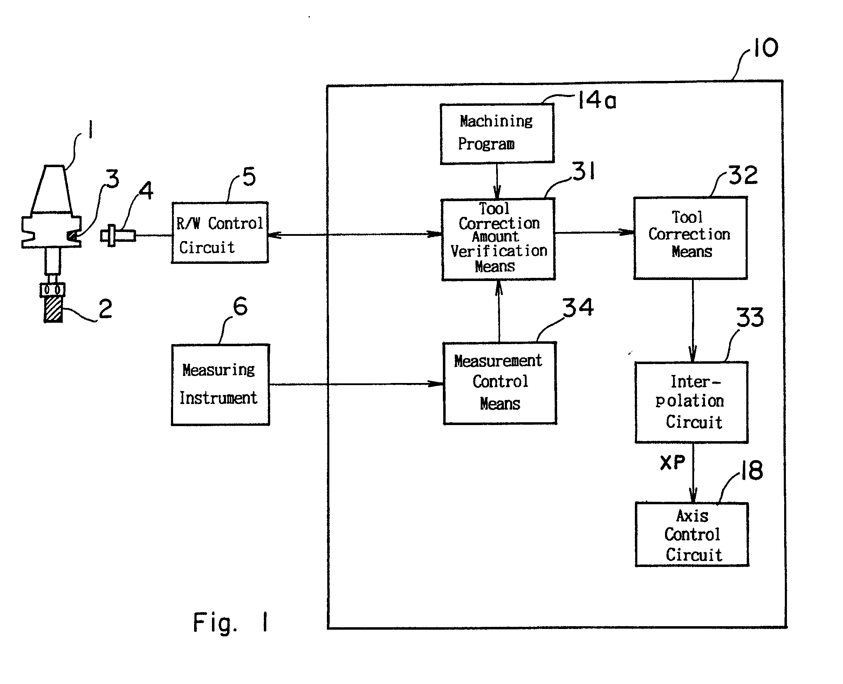

Figure 1 is a conceptual diagram of a tool correction system according to the present invention, wherein a tool 2 is mounted to a tool holder 1 and a memory 3 is embedded in the tool holder 1. The memory 3 is an EEPROM having a memory capacity of about 200 bytes, and a head 4 is distanced from the memory 3 by about 2 mm but magnetically connected thereto. More specifically, a writing pulse supplied from the head 4 is received by the circuit on the memory 3 side and written to the embedded EEPROM. The writing to the embedded EEPROM at this time is carried out by using the writing pulse from the head 4 and thus no special power supply is needed by the memory 3. Further, when a reading pulse is supplied from the head 4 to the memory 3, the content of the EEPROM is read in accordance with the reading pulse and an impedance is changed in accordance with the logic state thereof. Accordingly, the content of the memory 3 can be read by the head 4 based on the change of the impedance . The writing/reading is controlled by an R/W control circuit 5.

Next, a procedure for writing tool correction data to the memory 3 will be described. The tool number or tool length of the tool 1 is input through the keyboard of a not shown numerical control apparatus 10, and temporarily stored in a tool correction amount verification means 31.

A wear amount of tool is measured by a measuring instrument 6, and the measured value is converted into a digital value by a measurement control means 34 and supplied to the tool correction amount verification means 31. The measuring instrument 6 is a laser length measuring instrument, optical measuring instrument or the like. The tool correction amount verification means 31 supplies tool correction data such as the tool number, tool length, and wear amount of the tool 1 to the R/W control circuit 5, which writes the tool correction data to the memory 3 in response to the writing pulse from the head 4.

When a machining program 14a in a non-volatile memory 14 to be described below provided with the numerical control apparatus 10 includes a tool correction command, the tool correction amount verification means 31 reads the tool correction data in the memory 3 and determines whether or not the tool number corresponds to the tool correction command. If there is no correspondence therebetween, the numerical control apparatus 10 displays an alarm and interrupts the machining operation. Conversely, if a correspondence therebetween exists, the numerical control apparatus 10 supplies the tool length and wear amount of the tool to a tool correction means 32, to thereby execute tool correction based on the commanded values, and the commanded values used for the tool correction are supplied to an interpolation means 33, which carries out an interpolation process and supplies a command pulse XP to an axis control circuit 18.

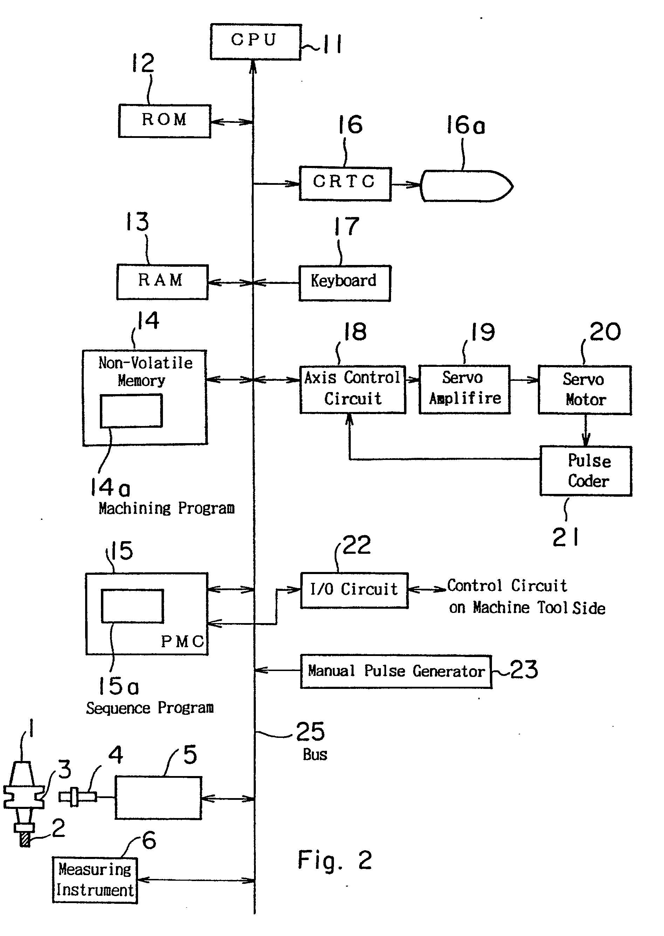

Figure 2 is a block diagram of the hardware of the numerical control apparatus (CNC) embodying the present invention. A processor 11 controls the numerical control apparatus as a whole, in accordance with a system program stored in a ROM 12. The ROM 12 is an EPROM or EEPROM, and the RAM 13 is an SRAM or the like in which various data are stored. The non-volatile memory 14 is composed of a CMOS which stores the machining program 14a, parameters and the like, and the content of this data is maintained even after a power supply to the numerical control apparatus is cut off, because the CMOS is supplied with power from a battery and is a non-volatile memory.

A programmable machine controller (PMC) 15 receives a command such as an M function, S function, T function and the like, decodes the command by a sequence program 15a and outputs and output signal for controlling a machine tool. Further, the PMC receives a limit switch signal from the machine tool or a switching signal from a machine operator's panel, processes these signals by the sequence program 16a, and outputs an output signal for controlling the machine tool, whereupon signals required by the numerical control apparatus are supplied to the RAM 13 through a bus 25 and read by the processor 11.

A graphic control circuit 16 converts data such as the present position, amount of movement and the like of each axis into signals for display, and supplies those signals to a display 16a for a display thereat. A CRT, liquid crystal display or the like is used as the display 16a, and a keyboard 17 is used to input the tool number, tool length, and the like; it is also used to input various other data.

The axis control circuit 18 receives a position signal from the processor 11 and outputs a speed command signal, for controlling a servo motor 20, to a servo amplifier 19, which amplifies the speed command signal and drives the servo motor 20. A pulse coder 21 is connected to the servo motor 20 to output a position feedback signal, and the pulse coder 21 feeds back the position feedback pulse to the axis control circuit 18. A position detector such as a linear scale or the like may be used in addition to the pulse coder 21. Note these elements are provided in accordance with the number of shafts, but only the elements for a single shaft are shown here as each element has the same arrangement.

An I/O circuit 22 supplies and receives an I/O signal to and from the machine tool. More specifically, the I/O circuit 22 receives the limit switch signal from the machine tool and the switching signal from the machine operator's panel and the PMC 15 reads these signals. Further, the I/O circuit 22 receives a signal output from the PMC 15 to control the air actuators and the like of the machine tool and outputs the same to the machine tool.

A manual pulse generator 23 is used to output a pulse train, to thereby precisely move each axis in accordance with a rotational angle and to precisely position the machine tool. A manual pulse generator 23 is usually mounted on the machine operator's panel.

The tool holder 1 holds the tool 2 at the extreme end thereof, the memory 3 is embedded in the tool holder 1, and the head 4 writes and reads the tool correction data to and from the memory 3 by the R/W control circuit 5 connected to the bus 25. Further, the measuring instrument 6 is also connected to the bus 25.

A spindle control circuit for controlling spindles, spindle amplifier, spindle motor and the like are not shown in the figure.

Further, although only one processor is used here, a plurality of the processors may be used, to provide a multi-processor system.

Although the tool length and wear amount of tool are used as the tool correction data in the above description, a value including the tool wear amount may be used as the tool length. Also, a tool diameter or a tool diameter including an amount of wear may be used as the tool correction data in a similar way.

Further, tool correction data measured by a means other than the measuring instrument may be input through the keyboard and written to the memory of the tool holder.

Furthermore, although the memory is embedded in the tool holder, it may be directly embedded in the tool, and further, the EEPROM is used as the memory, a bubble memory or the like may be used.

As described above, according to the present invention, since tool correction data is directly written to the memory embedded in a tool holder or the like, and used for tool correction, a tool number always corresponds to the tool correction data, and thus the management of the tool correction data can be simplified. With this arrangement, an improper machining, breakage of a tool, and the like can be prevented.

**Claims**

1. A tool correction system for correcting a tool length, tool diameter, wear amount of a tool and the like in a numerical control apparatus, comprising the steps of:
   writing tool correction data to a memory, to and from which data can be written and read, provided at a tool holder or tool;
   reading said tool correction data in response to a tool correction command in a machining program; and
   executing a tool correction.

2. A tool correction system according to claim 1, wherein said tool correction data includes a tool number, and when said machining program issues said tool correction command, said tool correction command is verified by reading said tool number from said memory.

3. A tool correction system according to claim 1, wherein said correction data selects a tool, directly measures said tool by a measuring instrument, and writes a result of the measurement to said memory together with the tool number.

4. A tool correction system according to claim 1, wherein said tool length and said wear amount of a tool are simultaneously written to and read from tool correction data.

EP 0 462 279 A1

1

3

4

2

5 R/W Control Circuit

6 Measuring Instrument

10

14a Machining Program

31 Tool Correction Amount Verification Means

32 Tool Correction Means

34 Measurement Control Means

33 Inter-polation Circuit

XP

18 Axis Control Circuit

Fig. 1

Fig. 2

# INTERNATIONAL SEARCH REPORT

International Application No PCT/JP90/01603

**I. CLASSIFICATION OF SUBJECT MATTER** (if several classification symbols apply, indicate all)

According to International Patent Classification (IPC) or to both National Classification and IPC

Int. Cl$^5$    B23Q17/00,_B23Q3/155

**II. FIELDS SEARCHED**

Minimum Documentation Searched

| Classification System | Classification Symbols |
|---|---|
| IPC | B23Q17/00, B23Q3/155-157 |

Documentation Searched other than Minimum Documentation
to the Extent that such Documents are Included in the Fields Searched

Kokai Jitsuyo Shinan Koho          1971 - 1990

**III. DOCUMENTS CONSIDERED TO BE RELEVANT**

| Category* | Citation of Document,[11] with indication, where appropriate, of the relevant passages[12] | Relevant to Claim No.[13] |
|---|---|---|
| X | EP, A2, 230642 (GTE Valeron Corp.), August 5, 1987 (05. 08. 87), Line 29, column 5 to line 28, column 6 & US, A, 4242470 & JP, A, 62-181857 | 1, 2 |
| Y | EP, A2, 230642 (GTE Valeron Corp.), August 5, 1987 (05. 08. 87) & US, A, 4242470 & JP, A, 62-181857 | 1-4 |
| Y | JP, A, 62-063050 (Omron Corp.), March 19, 1987 (19. 03. 87), Line 9, lower left column, page 4 to line 4, upper right column, page 5 & EP, A2, 214666 | 1, 2 |
| Y | JP, A, 62-120945 (Tokimec Corp.), June 2, 1987 (02. 06. 87), Line 10, upper right column to line 16, lower left column, page 3 & DE, A1, 3639578 & GB, A1, 2185130 & US, A, 4809426 | 1, 2 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| March 4, 1991 (04. 03. 91) | March 11, 1991 (11. 03. 91) |

| International Searching Authority | Signature of Authorized Officer |
|---|---|
| Japanese Patent Office | |

Form PCT/ISA/210 (second sheet) (January 1985)

International Application No. PCT/JP90/01603

| FURTHER INFORMATION CONTINUED FROM THE SECOND SHEET | | |
|---|---|---|
| Y | JP, U, 64-016229 (Okuma Machinery Works, Ltd.), January 26, 1989 (26. 01. 89) | 1, 2 |
| Y | JP, A, 57-138562 (Okuma Machinery Works, Ltd.), August 26, 1982 (26. 08. 82), Lines 6 to 16, upper left column, page 2 (Family: none) | 1, 4 |
| P | JP, A, 1-321149 (Toyo Seiki K.K.), December 27, 1989 (27. 12. 89), Line 7, upper right column to line 18, lower left column, page 2 | 3 |

## V.☐ OBSERVATIONS WHERE CERTAIN CLAIMS WERE FOUND UNSEARCHABLE [1]

This international search report has not been established in respect of certain claims under Article 17(2) (a) for the following reasons

1 ☐ Claim numbers          because they relate to subject matter not required to be searched by this Authority, namely:

2.☐ Claim numbers          , because they relate to parts of the international application that do not comply with the prescribed requirements to such an extent that no meaningful international search can be carried out, specifically

3.☐ Claim numbers          , because they are dependent claims and are not drafted in accordance with the second and third sentences of PCT Rule 6.4(a)

## VI.☐ OBSERVATIONS WHERE UNITY OF INVENTION IS LACKING [2]

This International Searching Authority found multiple inventions in this international application as follows:

1.☐ As all required additional search fees were timely paid by the applicant, this international search report covers all searchable claims of the international application

2 ☐ As only some of the required additional search fees were timely paid by the applicant, this international search report covers only those claims of the international application for which fees were paid, specifically claims.

3.☐ No required additional search fees were timely paid by the applicant. Consequently, this international search report is restricted to the invention first mentioned in the claims: it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest

☐ No protest accompanied the payment of additional search fees

Form PCT/ISA/210 (supplemental sheet (2)) (January 1985)

| FURTHER INFORMATION CONTINUED FROM THE SECOND SHEET | | |
|---|---|---|
| A | JP, A, 62-251038 (Toshiba Corp.), October 31, 1987 (31. 10. 87), Claim (Family: none) | 1, 2 |
| A | EP, A1, 198943 (Kitamura Kikai K.K.), October 29, 1986 (29. 10. 86), Claim (Family: none) | 3 |
| A | JP, A, 56-033257 (Mitsubishi Electric Corp.), April 3, 1981 (03. 04. 81), Claim (Family: none) | 2 |

## V.☐ OBSERVATIONS WHERE CERTAIN CLAIMS WERE FOUND UNSEARCHABLE ¹

This international search report has not been established in respect of certain claims under Article 17(2)(a) for the following reasons

1.☐ Claim numbers         because they relate to subject matter not required to be searched by this Authority, namely

2.☐ Claim numbers         , because they relate to parts of the international application that do not comply with the prescribed requirements to such an extent that no meaningful international search can be carried out, specifically

3.☐ Claim numbers         , because they are dependent claims and are not drafted in accordance with the second and third sentences of PCT Rule 6.4(a).

## VI.☐ OBSERVATIONS WHERE UNITY OF INVENTION IS LACKING ²

This International Searching Authority found multiple inventions in this international application as follows:

1.☐ As all required additional search fees were timely paid by the applicant, this international search report covers all searchable claims of the international application

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims, it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest

☐ No protest accompanied the payment of additional search fees.

Form PCT/ISA/210 (supplemental sheet (2)) (January 1985)